## Europäisches Patentamt
## European Patent Office
## Office européen des brevets

(19)

(11) Veröffentlichungsnummer: **0 088 270**
**B1**

(12) **EUROPÄISCHE PATENTSCHRIFT**

(45) Veröffentlichungstag der Patentschrift:
08.11.89

(51) Int. Cl.⁴: **G 01 L 9/14**

(21) Anmeldenummer: **83101608.4**

(22) Anmeldetag: **19.02.83**

(54) Drucksensor.

(30) Priorität: **08.03.82 DE 3208243**
**23.07.82 DE 3227516**

(43) Veröffentlichungstag der Anmeldung:
**14.09.83 Patentblatt 83/37**

(45) Bekanntmachung des Hinweises auf die Patenterteilung:
**08.11.89 Patentblatt 89/45**

(84) Benannte Vertragsstaaten:
**FR GB IT SE**

(56) Entgegenhaltungen:
**DE-A- 2 946 515**
**FR-A- 2 272 381**
**US-A- 3 922 388**
**US-A- 4 104 607**

**PATENTS ABSTRACTS OF JAPAN, Band 5, Nr.
125(E-69)(797), 12. August 1981 & JP - A - 56 62382
(TOKYO SHIBAURA DENKI K.K.) 28.05.1981**

**Die Akte enthält technische Angaben, die nach dem
Eingang der Anmeldung eingereicht wurden und die
nicht in dieser Patentschrift enthalten sind.**

(73) Patentinhaber: **ROBERT BOSCH GMBH, Postfach 50,
D-7000 Stuttgart 1 (DE)**

(72) Erfinder: **Herden, Werner, Dr., Hölderlinstrasse 5,
D-7016 Gerlingen (DE)**

## Beschreibung

Stand der Technik

Die Erfindung geht aus von einem Drucksensor nach der Gattung des Anspruchs 1.

Aus der Schrift DE-OS 2 842 140 ist es bekannt, zur Messung von Absolut- oder Relativdrücken Drucksensoren zu verwenden, bei denen eine druckabhängig auslenkbare Membrandose einen Permanentmagneten trägt, der mit einem feststehenden magnetfeldempfindlichen Element zusammenwirkt. Diese Sensoren bedürfen jedoch einer gesonderten Auswahl der Schaltung. Es können sich unerwünschte Temperaturabhängigkeiten des Meßsignals ergeben, was zu Fehlmessungen und Fehlsteuerungen führen kann. Schließlich sind besondere Vorkehrungen hinsichtlich der Betriebsspannung erforderlich.

Aus der Druckschrift DE-OS 2 946 515 ist ein Drucksensor bekannt, bei dem ein Hallelement und ein ihm zugeordneter Hybridschaltkreis auf einer gemeinsamen Substratplatte aufgebracht sind. Diese Substratplatte ist aber zusätzlich im Gehäuse angeordnet, so daß zusätzliche Arbeitsschritte bei der Herstellung notwendig sind. Auch bei diesem Drucksensor ist das Ausgangssignal stark temperaturabhängig.

Ferner ist in der Druckschrift FR-A-2 272 381 ein Drucksensor beschrieben, bei dem Dickschichtwiderstände verwendet werden. Diese vereinfachen zwar die Herstellung des Drucksensors, können aber die Temperaturabhängigkeit des Meßsignals nicht genügend reduzieren. Ferner weist der Sensor keine ausreichend gute Alterungsbeständigkeit auf.

Der japanischen Druckschrift JP-A-56-62 382 ist die Herstellung eines GaAs-Hallelements entnehmbar. Hier wird eine einfache Herstellung eines GaAs-Sensors mit kreuzweise aufgebrachten Meßelementen beschrieben, ohne dabei auf deren Verwendung oder Eigenschaften einzugehen.

In der Schrift US-PS 3 922 388 wird ein Herstellungsverfahren für einen Dickschichtwiderstand erläutert, um einen genauen Temperaturkoeffizienten einzustellen. Hierzu wird eine Mischung aus positivem und negativem Dickschichtwiderstandsmaterial hergestellt. Angestrebt wird dabei eine Stabilität des Widerstandselementes bei einem genauen Wert über eine sehr lange Zeitdauer.

Aufgabe der Erfindung ist es, einen Drucksensor herzustellen, dessen Ausgangssignal weitgehend temperaturunabhängig ist.

Diese Aufgabe wird erfindungsgemäß durch die Anwendung der Merkmale gemäß Kennzeichnungsteil des Patentanspruchs 1 gelöst.

Vorteile der Erfindung

Der erfindungsgemäße Sensor mit den kennzeichnenden Merkmalen des Hauptanspruches hat demgegenüber den Vorteil, daß durch Integration der Auswerteschaltung in das Sensorgehäuse ein besonders kompakter und störunanfälliger Aufbau des Sensors möglich wird. Darüber hinaus ergibt das verwendete magnetfeldempfindliche Element einen besonders geringen Temperaturgang, wobei der noch verbleibende geringe Temperaturgang weiterhin durch den Aufbau der integrierten Auswerteschaltung kompensiert werden kann. Schließlich erfordert das erfindungsgemäß verwendete magnetfeldempfindliche Element nur geringe Versorgungsspannungen.

Durch die in den Unteransprüchen aufgeführten Maßnahmen sind vorteilhafte Weiterbildungen des im Hauptanspruch angegebenen Drucksensors möglich.

Bei Ausbildung des Sensors als Absolutdrucksensor wird eine geschlossene, vorzugsweise evakuierte Membrandose verwendet. Das Gehäuse wird von einer Substratplatte verschlossen und mit dem Meßdruck beaufschlagt. Durch Anordnung des magnetfeldempfindlichen Elementes und der Auswerteschaltung auf der dem Meßdruck abgewandten Seite wird ein Schutz dieser Elemente vor dem oftmals agressiven Druckmedium erzielt.

Bei Realisierung eines Absolutdruck-Sensors wird ferner ein besonders kompakter Aufbau dadurch erzielt, daß als Substratplatte für die integrierte Auswerteschaltung und das magnetfeldempfindliche Element eine Kupferplatte verwendet wird, auf die eine Wellmembran-Halbdose gelötet wird, so daß Dose und Substratplatte eine Baueinheit bilden. Dies ergibt auch eine einheitliche Technologie und eine einfachere Herstellung eines erfindungsgemäßen Sensors.

Weitere Vorteile ergeben sich aus der Beschreibung sowie der beigefügten Zeichnung.

Zeichnung

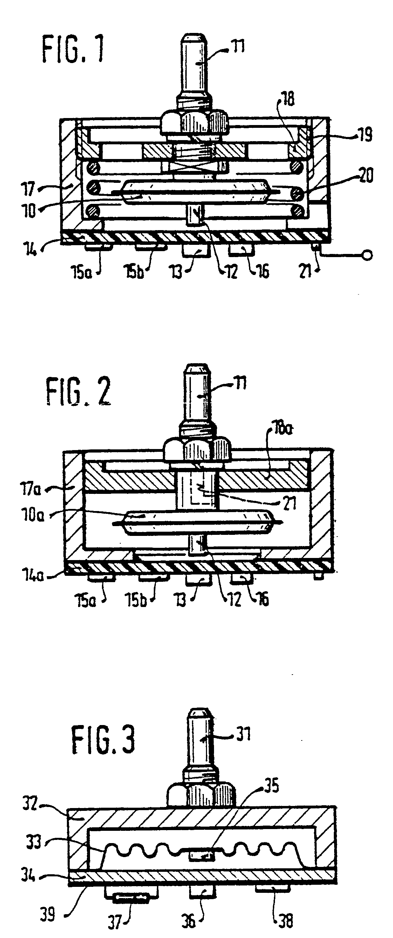

Die Erfindung ist in der Zeichnung dargestellt und wird in der nachfolgenden Beschreibung näher erläutert. Es zeigen Figuren 1 bis 3 jeweils einen Querschnitt durch eine erste bzw. dritte Ausführungsform eines erfindungsgemäßen Drucksensors.

Beschreibung des Ausführungsbeispiels

In der Figur 1 bezeichnet 10 eine Membrandose, der über einen Stutzen 11 ein Druck zuführbar ist. Die Membrandose 10 trägt einen Permanentmagneten 12, vorzugsweise eine Kobalt-Seltene-Erden-Legierung, etwa CoSm. Gegenüber dem Permanentmagneten 12 ist raumfest ein GaAs-Hall-Element 13 auf einer Substratplatte 14 angeordnet. Die Substratplatte 14 trägt weiterhin einen Hybridschaltkreis bestehend aus Dickschichtwiderständen 15a, 15b sowie wenigstens einem Differenzverstärker 16. Die Substratplatte 14 begrenzt ein Ende eines Gehäuses 17, in das eine Scheibe 18 mit einem Gewinde 19 eingeschraubt ist, wobei die Scheibe 18 den Stutzen 11 bzw. die Membrandose 10 mit Permanentmagnet 12 trägt. Die Scheibe 18 stützt sich über eine Feder 20 am Gehäuse 17 ab. Schließlich ist noch ein elektrischer Anschluß 21 für den Hybridschaltkreis auf der Substratplatte 14 vorgesehen.

Wird der Membrandose 10 über den Stutzen 11 ein Meßdruck zugeführt, wird die Membrandose 10 ausgelenkt und damit der Abstand des Permanentmagnetens 12 vom Element 13 variiert. Dies ergibt ein sich änderndes Ausgangssignal des Elementes 13, wobei das GaAs einen besonders niedrigen Temperaturkoeffizienten bei gleichzeitig hoher Signalausbeute aufweist. Durch Integration der Verstärkeranordnung auf der Substratplatte 14 in das Sensorgehäuse 17 ist eine unmittelbare Auswertung des Ausgangssignales des GaAs-Elementes 13 möglich. Durch Abgleich der Dickschichtwiderstände 15a, 15b usw. kann dabei die Kennlinie des Drucksensors eingestellt werden, beispielsweise bei verschiedenen Temperaturen, so daß eine vollkommene Temperaturgangkompensation möglich ist. Ebenso kann erfindungsgemäß der Nullpunkt durch Eindrehen der Scheibe 18 variiert werden.

Es versteht sich, daß die in der Figur dargestellte Anordnung nur beispielhaft für die Messung eines der Membrandose 10 zuleitbaren Druckes zu verstehen ist. Es ist selbstverständlich auch möglich, die Membrandose 10 als absolutdruckdose verschlossen auszubilden und dem Inneren des Gehäuses 17 den Meßdruck zuzuleiten. Weiterhin ist es möglich, mehrere Membrandosen 10 zu verwenden, die auf dasselbe GaAs-Element 13 einwirken, so daß auf diese Weise Differenzdruckmessung möglich sind. Auch ist es möglich, in der Achse des Sensors einen weiteren Permanentmagneten zu Kompensationszwecken auf der dem Permanentmagneten 12 abgewandten Seite des GaAs-Elementes 13, vorzugsweise auf einer weiteren einschraubbaren Scheibe anzuordnen.

Hierzu weisen die Dickschichtwiderstände 15a, 15b, 38 einen unterschiedlichen Temperaturkoeffizienten auf. Die Dickschichtwiderstände haben somit ein unterschiedliches Temperaturverhalten, so daß sich deren Widerstand bei Änderung der Temperatur unterschiedlich verhält. Ebenso kann erfindungsgemäß der Nullpunkt durch Eindrehen der Scheibe 18 variiert werden.

Es versteht sich weiter, daß die in Figur 1 vorgesehene Scheibe 18 zur Justierung der Membrandose 10 entfallen kann, wenn die verwendete Membrandose 10 sowie der Permanentmagnet 12 in ihren Eigenschaften reproduzierbar und damit nicht mehr kompensationsbedürftig sind. Dies ist beim Ausführungsbeispiel gemäß Figur 2 vorgesehen, bei dem die Scheibe 18a fest im Gehäuse 17a angeordnet ist. Der Sensor gemäß Figur 2 ist als Absolutdrucksensor ausgebildet. Die Membrandose 10a ist verschlossen und vorzugsweise evakuiert. Der Meßdruck wird dem Innenraum des Gehäuses 17a über den Stutzen 11 sowie einen an der Membrandose 10a vorbeiführenden Kanal 21 zugeführt. Das Gehäuse 17a wird durch die Substratplatte 14a am Boden druckdicht verschlossen. Dabei sind das magnetfeldempfindliche Element 13 sowie die Elemente 15a, 15b, 16 des Hybridschaltkerns auf der Außenseite der Substratplatte 14a angeordnet, so daß sie vom Druckmedium zum Innern des Gehäuses 17a nicht beaufschlagt werden.

Bei dem in Figur 3 dargestellten weiteren Ausführungsbeispiel eines erfindungsgemäßen Drucksensors bezeichnet 31 wiederum einen Stutzen, durch den dem Inneren eines Gehäuses 32 ein Meßdruck, im vorliegenden Fall ein Absolutdruck zugeführt werden kann. Die hierzu erforderliche geschlossene Absolutdruckdose wird durch eine Wellmembran-Halbdose 33 gebildet, die den Permanentmagneten 35 trägt. Die Wellmembran-Halbdose 33 ist auf eine Kupfer-Substratplatte 34 aufgelötet, wodurch die geschlossene Absolutdruckdose gebildet wird. Die Kupfer-Substratplatte 34 weist an ihrer Oberfläche eine Email-Isolierung 39 auf, auf der das GaAs-Element 36 sowie Dickschichtwiderstände 38 und ein Verstärker 37 angeordnet sind.

Die durch die Wellmembran-Halbdose 33 und die Substratplatte 34 gebildete Absolutdruckdose ist vorzugsweise evakuiert, so daß der über den Stutzen 31 zugeführte Absolut-Meßdruck die Auslenkung der Wellmembran-Halbdose 33 und damit des Permanentmagneten 35 relativ zum GaAs-Element 36 bewirkt. Auf diese Weise wird ein besonders kompakter Aufbau eines Drucksensors für Absolutdruckmessungen realisiert, wobei weiterhin eine einheitliche Technologie zur Herstellung der Absolutdose verwendet wird.

**Patentansprüche**

1. Drucksensor mit einem Gehäuse (17, 17a, 32), in dessen Achse nahe beieinander hintereinander angeordnet sind

a) eine einem Meßdruck ausgesetzte Membrandose (10, 10a, 33), deren eine Wand einen Permanentmagneten (12, 35) trägt,

b) ein Hallelement,

c) das Hallelement auf einer Substratplatte (14, 14a, 34) angeordnet ist, die einen Hybridschaltkreis mit Dickschichtwiderständen sowie einen Differenzverstärker (16, 37) trägt, gekennzeichnet durch die Merkmale:

d) Das Hallelement ist ein GaAs-Hall-Element (13, 36),

e) die Dickschichtwiderstände (15a, 15b, 38) haben unterschiedliche Temperaturkoeffizienten,

f) die Substratplatte (14, 14a, 34) begrenzt ein Ende des Gehäuses (17, 17a, 32).

2. Drucksensor nach Anspruch 1, gekennzeichnet durch die weiteren Merkmale:

g) die Membrandose (10a) ist als geschlossene Absolutdruckdose und das Gehäuse (17a) ist als durch die Substratplatte (14a) geschlossenes, mit dem Meßdruck beaufschlagtes Gehäuse ausgebildet,

h) der Hybridschaltkreis und das magnetempfindliche Element sind auf der vom Meßdruck abgewandten Seite der Substratplatte (14a) angeordnet.

3. Drucksensor nach Anspruch 1 oder 2, gekennzeichnet durch die weiteren Merkmale:

i) die Substratplatte (34) besteht aus Kupfer mit einer Emailisolation (39).

j) die Membrandose ist als geschlossene Absolutdruckdose derart ausgebildet, daß eine Wellmembran-Halbdose (33) auf die Substratplatte (34) aufgelötet ist.

## Claims

1. Pressure sensor having a housing (17, 17a, 32), in the axis of which there are arranged juxtaposed and in series

(a) a diaphragm capsule (10, 10a, 33) exposed to a measurement pressure, one wall of which carries a permanent magnet (12, 35),

(b) a Hall element,

(c) The Hall element is arranged on a substrate plate (14, 14a, 34) which carries a hybrid circuit with thick layer resistances and a differential amplifier (16, 37),

characterized by the features:

(d) The Hall element is a GaAs Hall element (13, 36),

(e) The thick layer resistances (15a, 15b, 38) have different temperature coefficients,

(f) The substrate plate (14, 14a, 34) delimits an end of the housing (17, 17a, 32).

2. Pressure sensor according to Claim 1, characterized by the further features:

(g) The diaphragm capsule (10a) is constructed as a closed absolute pressure capsule, and the housing (17a) as a housing cloused by the substrate plate (14a) and exposed to the measurement pressure,

(h) The hybrid circuit and the element sensitive to magnetic fields are arranged on the side of the substrate plate (14a) remote from the measurement pressure.

3. Pressure sensor according to Claim 1 or 2, characterized by the further features:

(i) The substrate plate (34) consists of copper with an enamel insulator (39),

(j) The diaphragm capsule is constructed as a closed absolute pressure capsule in that a corrugated diaphragm half-capsule (33) is soldered onto the substrate plate (34).

## Revendications

1. Capteur de pression comportant un boîtier (17, 17a, 32) dans l'axe duquel sont placés les uns à côté des autres, les uns derrière les autres:

a) une capsule à membrane (10, 10a, 32) soumise à la pression à mesurer dont une paroi porte un aimant permanent (12, 35),

b) une cellule de Hall,

c) la cellule de Hall est placée sur une plaque-substrat (14, 14a, 34) qui porte un circuit hybride comportant des résistances à couche épaisse comme amplificateur différentiel;

caractérisé par les dispositions:

d) la cellule de Hall est un composant Ga–As (13, 36),

e) les résistances à couche épaisse (15a, 15b, 38) possèdent des coefficients de température différents,

f) la plaque-substrat (14, 14a, 34) fait la limite d'une extrémité du boîtier (17, 17a, 32).

2. Capteur de pression selon la revendication 1, caractérisé par les dispositions suivantes:

g) la capsule à membrane (10a) est sous la forme d'un boîtier fermé soumis à la pression à mesurer,

h) le circuit hybride et l'élément sensible au champ magnétique sont placés sur le côté faisant face à la pression à mesurer de la plaque-support (14a).

3. Capteur de pression selon la revendication 1 et 2, caractérisé par les dispositions suivantes:

i) la plaque-support (34) est constituée de cuivre avec une isolation d'émail (39),

j) la capsule à membrane est sous forme d'une capsule à pression absolue, de telle sorte qu'une semi-membrane ondulée (33) soit soudée sur la plaque-support (34).

FIG. 1

FIG. 2

FIG. 3